(19) **Europäisches Patentamt**

**European Patent Office**

**Office européen des brevets**

(11) **EP 0 581 630 B1**

(12) **FASCICULE DE BREVET EUROPEEN**

(45) Date de publication et mention
de la délivrance du brevet:
**03.09.1997 Bulletin 1997/36**

(51) Int. Cl.⁶: **B60L 7/26**, B60T 8/26

(21) Numéro de dépôt: **93401773.2**

(22) Date de dépôt: **07.07.1993**

(54) **Correcteur de freinage électro-hydraulique**

Elektrohydraulisches Bremsventil

Electrohydraulic braking corrector

(84) Etats contractants désignés:
**DE GB IT**

(30) Priorité: **28.07.1992 FR 9209589**

(43) Date de publication de la demande:
**02.02.1994 Bulletin 1994/05**

(73) Titulaires:
- **AUTOMOBILES PEUGEOT**
  **75116 Paris (FR)**
- **AUTOMOBILES CITROEN**
  **92200 Neuilly-sur-Seine (FR)**

(72) Inventeur: **Petiot, Jean-Paul**
**F-91460 Marcoussis (FR)**

(74) Mandataire: **Gendraud, Pierre et al**
**GIE PSA - Peugeot - Citroen,**
**Département Propriété Industrielle,**
**18, Rue des Fauvelles**
**92250 La Garenne Colombes (FR)**

(56) Documents cités:
EP-A- 0 390 621          EP-A- 0 398 793
GB-A-   583 713

## Description

La présente invention a pour objet un correcteur de freinage électro-hydraulique ; elle trouve son application dans le domaine du transport, par véhicule à propulsion électrique.

Un véhicule à propulsion électrique comporte un moteur dont le couple est pratiquement constant de 0 à n t/mn, n étant le plus souvent de l'ordre de 1500, puis diminue proportionnellement au régime du moteur. La puissance quant à elle croît de 0 à n t/mn et reste constante ensuite.

L'utilisation du moteur en frein permet de recharger les batteries et d'augmenter ainsi l'autonomie. Mais le couple résistant est pratiquement égal au couple moteur à même régime ; il diminue donc avec le régime du moteur. Le frein moteur est en outre insuffisant pour arrêter un véhicule nécessitant une forte décélération et il faut lui adjoindre un dispositif de freinage hydraulique classique. Cependant, la somme des actions de freinage est alors variable, ce qui pose des problèmes notamment pour les éléments de propulsion (risques de blocage des roues à faible vitesse).

De tel correcteur de freinage électro-hydraulique sont connus de l'art antérieur, notamment du brevet GB-A-0583713. Il est décrit dans ce document un correcteur de freinage électro-hydraulique pour véhicule à propulsion électrique, comportant des moyens mobiles propres à modifier la pression de freinage hydraulique exercée sur un essieu en fonction du couple de freinage du moteur électrique de propulsion, lesdits moyens mobiles étant constitués par un électro-aimant à commande proportionnelle commandé par des moyens de pilotage fonction du couple de freinage du moteur électrique, et un compensateur de freinage asservi.

La présente invention a pour objet un correcteur de freinage électro-hydraulique pour véhicule à propulsion électrique, comportant des moyens mobiles commandés par des moyens de pilotage et propres à modifier la pression de freinage hydraulique exercée sur un essieu en fonction du couple de freinage du moteur électrique de propulsion et un compensateur de freinage asservi, d'un type perfectionné.

Ce correcteur est caractérisé en ce que lesdits moyens de pilotage comprennent un circuit de mise en forme, un calculateur apte à évaluer la force de freinage électrique en fonction du couple de freinage électrique et du rapport de boîte de vitesses engagé et à fournir une valeur de consigne proportionnelle à cette force, et un circuit de puissance apte à fournir un courant proportionnel à cette valeur de consigne.

L'invention est particulièrement applicable lorsque le véhicule comporte un compensateur de freinage asservi du type à tiroir et biellette articulée autour d'un axe. Dans ce cas, la biellette articulée comporte de préférence un premier bras dont l'extrémité est liée à la suspension par un ressort et un deuxième bras dont l'extrémité est reliée à des moyens de réglage pilotés par le couple de freinage du moteur électrique propulsant le véhicule.

Les moyens mobiles en fonction du couple de freinage du moteur électrique d'entraînement du véhicule peuvent comprendre un moteur couple piloté ou bien un moteur continu ou pas-à-pas commandé par les moyens de pilotage fonction du couple de freinage du moteur électrique, l'axe du moteur couple, du moteur continu ou du moteur pas-à-pas portant un pignon en prise avec un crémaillère.

On a décrit ci-après, à titre d'exemple non limitatif, un mode de réalisation du correcteur selon l'invention, avec référence au dessin annexé dans lequel :

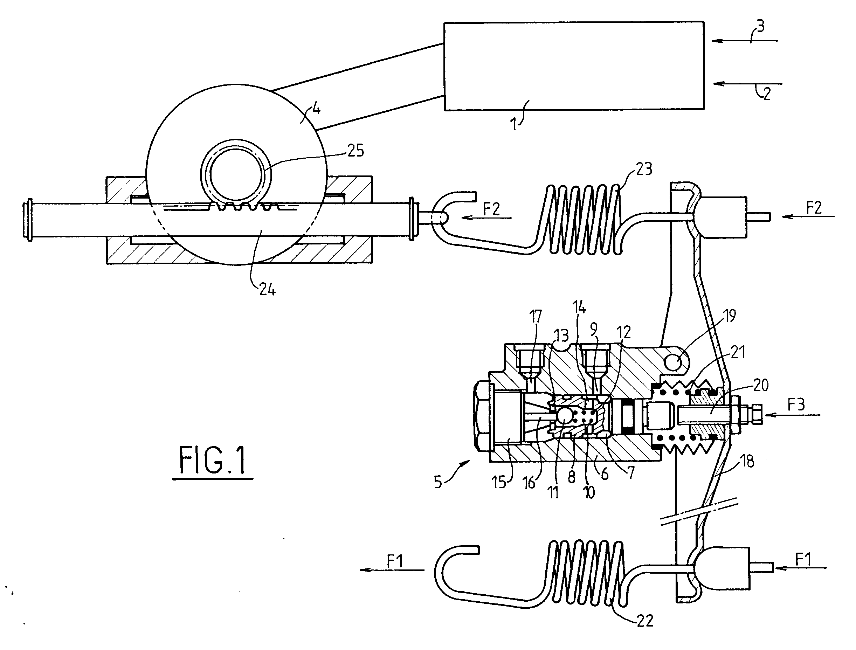

La Figure 1 est une vue schématique de l'ensemble du dispositif;

La Figure 2 est un schéma du boîtier de commande de délestage du freinage hydraulique.

Tel qu'il est représenté au dessin, le correcteur de freinage électro-hydraulique selon l'invention comprend un boîtier de délestage de freinage électrique 1 qui reçoit en 2 un signal représentant le rapport de boîte de vitesses engagé et en 3 un signal représentant le couple du moteur électrique d'entraînement du véhicule. Il comprend également un moteur couple 4 piloté par le boîtier de délestage 1 et un compensateur de freinage 5.

Le compensateur 5 comprend un corps 6 comportant un alésage 7 dans lequel est monté coulissant un piston étagé 8. Un conduit d'alimentation 9, prévu dans le corps 6 en regard de la partie de petit diamètre du piston 8, est relié au maître-cylindre du véhicule.

Dans le piston étagé 8 est ménagée une cavité 10 recevant un clapet 11 qu'un ressort 12 tend à maintenir en place sur un siège 13 solidaire du piston. Des orifices 14 prévus dans la partie de petit diamètre du piston étagé 8, mettent en communication la cavité 10 et l'alésage 7. Ce dernier est obturé par un bouchon 15 sur lequel est fixé un poussoir axial 16 propre à repousser le clapet 11. Le corps 6 présente à hauteur de ce poussoir un conduit d'utilisation 17 relié au circuit de freinage.

Une biellette 18 articulée en 19 sur le corps 6 porte un poussoir 20 susceptible d'agir à l'encontre de l'action exercée par un ressort 21 sur l'extrémité du piston étagé 8. L'une des extrémités de cette biellette est reliée par un ressort 22 à un essieu du véhicule et reçoit ainsi l'information de la charge de cet essieu. L'autre extrémité de la biellette 19 est reliée par un ressort 23 à une crémaillère 24 en prise avec un pignon 25 calé sur l'arbre d'un moteur couple 4 piloté par le boîtier de délestage 1 délivrant un courant fonction du couple de freinage du moteur électrique propulsant le véhicule.

Lorsque le compensateur 5 est au repos, le clapet 11 est écarté de son siège et la pression dans le circuit de freinage est celle régnant dans le maître-cylindre. Lorsque l'effort exercé sur la pédale augmente, la pression dans le circuit de freinage augmente et exerce sur le piston étagé 8 une force suffisante pour vaincre la force F3 exercée par la biellette 18 sur ce piston étagé. Le piston se déplace vers la droite du dessin et le clapet 11 se ferme; c'est le point d'intervention du compensateur. Une nouvelle augmentation de pression entraîne un déplacement du piston vers la gauche et la communication hydraulique est de nouveau rétablie, ce qui permet une nouvelle augmentation de la pression de freinage. Mais instantanément, le piston se déplace vers la droite et entraîne la fermeture du clapet 11. On se retrouve dans la même position (clapet fermé) que ci-dessus. Mais la pression dans le circuit de freinage a augmenté par rapport à le première fermeture du clapet. Pendant la phase de montée en pression, le piston 8 oscille autour d'une position d'équilibre; par une succession d'ouvertures et de fermetures, la pression dans le circuit de freinage augmente mais moins que la pression dans le maître-cylindre.

La force F3 est la résultante de la force F1 exercée sur la biellette 18 par le ressort 22 et de la force F2 exercée sur cette biellette par le ressort 23.

On a :

$$F3 = \frac{R1\ F1 - R2\ F2}{R\ 3}$$

R1,R2 et R3 étant les longueurs des bras de levier des forces, par rapport à l'axe d'articulation 19.

Si F1 représentant la charge sur l'essieu augmente, ou si F2 représentant le couple de freinage du moteur électrique propulsant le véhicule diminue, le correcteur augmente la pression dans le circuit de freinage hydraulique donc l'efficacité de ce dernier. Si F1 diminue ou si F2 augmente le correcteur diminue la pression dans le circuit de freinage hydraulique donc l'efficacité de ce dernier.

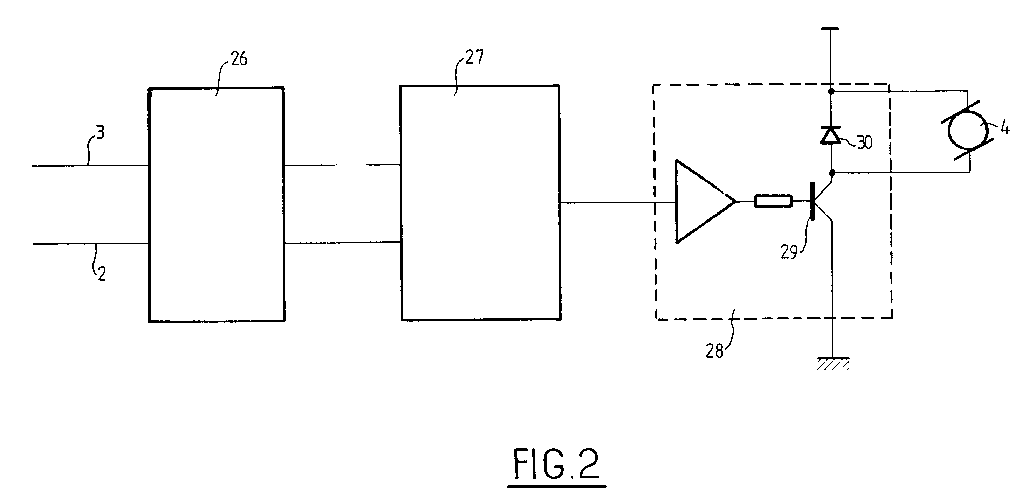

A la Figure 2, on voit un mode de réalisation du boîtier de délestage 1. Il comprend un circuit de mise en forme 26, un calculateur 27 qui évalue la force de freinage électrique en fonction du régime du moteur et du rapport de boîte de vitesse engagé et fournit une valeur de consigne proportionnelle à cette force, et un circuit de puissance 28 qui fournit un courant proportionnel à cette valeur de consigne; ce circuit de puissance peut, par exemple, être constitué par un hacheur à transistor 29 et diode de roue libre 30, dont le rapport cyclique (temps de conduction, temps de cycle) est proportionnel à la valeur de consigne.

Il va de soi que la présente invention ne doit pas être considérée comme limitée au mode de réalisation décrit et représenté mais en couvre, au contraire, toutes les variantes telles que définies en les revendications. C'est ainsi, par exemple, que le moteur couple 4, le pignon 25 et la crémaillère 24 pourraient être remplacés par un électro-aimant proportionnel. La consigne fournie par le calculateur 27 servirait à déterminer la position du plongeur de l'électro-aimant qui serait lié à l'une des extrémités de la biellette du compensateur 3 par un ressort.

## Revendications

1. Correcteur de freinage électro-hydraulique pour véhicule à propulsion électrique, comportant des moyens mobiles commandés par des moyens de pilotage et propres à modifier la pression de freinage hydraulique exercée sur un essieu en fonction du couple de freinage du moteur électrique de propulsion et un compensateur de freinage asservi (5), caractérisé en ce que lesdits moyens de pilotage comprennent un circuit de mise en forme (26), un calculateur (27) apte à évaluer la force de freinage électrique en fonction du couple de freinage électrique et du rapport de boîte de vitesses engagé et à fournir une valeur de consigne proportionnelle à cette force, et un circuit de puissance (28) apte à fournir un courant proportionnel à cette valeur de consigne.

2. Correcteur de freinage, selon la revendication 1, caractérisé en ce que le compensateur de freinage asservi (5) est lié à une biellette articulée (18) dont une première extrémité est liée à la suspension par un premier ressort (22) et dont la deuxième extrémité est liée par un second ressort (23) auxdits moyens mobiles.

3. Correcteur de freinage, selon la revendication 1 ou 2, caractérisé en ce que lesdits moyens mobiles sont choisis dans le groupe constitué par un moteur couple d'entraînement (4), un moteur continu et un moteur pas-à-pas.

4. Correcteur de freinage, selon la revendication 3, caractérisé en ce que lesdits moyens mobiles comprennent un moteur dont l'axe porte un pignon (25) en prise avec une crémaillère (24) liée au second ressort (23).

## Claims

1. Electro-hydraulic braking corrector for an electrically propelled vehicle, comprising movable means controlled by control means and capable of modifying the hydraulic braking pressure exerted on an axle as a function of the braking torque of the electric propulsion motor and a servo-driven braking compensator (5), characterised in that said control means comprise a pulse shaping circuit (26), a computer (27) capable of evaluating the electrical braking force as a function of the electrical braking torque and the gear box ratio engaged and of supplying a reference value proportional to this force, and a power circuit (28) capable of supplying a current proportional to this reference value.

2. Braking corrector according to Claim 1, characterised in that the servo-driven braking compensator (5) is linked to an articulated tie rod (18), a first end of which is linked to the suspension by a first spring (22) and the second end of which is linked by a second spring (23) to said movable means.

3. Braking corrector according to Claim 1 or 2, characterised in that said movable means are chosen from the group constituted by a drive torque motor (4), a continuous motor and a stepper motor.

4. Braking corrector according to Claim 3, characterised in that said movable means comprise a motor, the shaft of which has a pinion (25) engaged with a rack (24) linked to the second spring (23).

**Patentansprüche**

1. Elektrohydraulischer Bremskraftregler für Fahrzeuge mit Elektroantrieb, mit beweglichen Einrichtungen, die von Führungseinrichtungen gesteuert werden und in der Lage sind, die hydraulische Druckkraft zu verändern, die auf eine Nabe in Abhängigkeit des Bremsmoments des elektrischen Antriebsmotors ausgeübt wird und einem zugeordneten Bremskompensator (5), dadurch gekennzeichnet, daß die Führungseinrichtungen einen Formgebungs- oder Formsetzungskreis (circuit de mise en forme) (26), einen Rechner (27), der in der Lage ist, die elektrische Bremskraft in Abhängigkeit des elektrischen Bremsmoments und des in Eingriff befindlichen Getriebeverhältnisses festzustellen, und einen zu dieser Kraft proportionalen Speicherwert zu liefern, und einen Kraftkreis (28) aufweisen, der in der Lage ist, einen Strom zu liefern, der proportional zu diesem Speicherwert ist.

2. Bremskraftregler nach Anspruch 1, dadurch gekennzeichnet, daß der eingesetzte Bremskompensator (5) mit einer Anlenkpleuelstange (18) verbunden ist, dessen erstes Ende mit der Aufhängung durch eine erste Feder (22) und dessen zweites Ende durch eine zweite Feder (23) mit den beweglichen Einrichtungen verbunden ist.

3. Bremskraftregler nach Anspruch 1 oder 2, dadurch gekennzeichnet, daß die beweglichen Einrichtungen aus der Gruppe gewählt sind, die von einem Antriebsmomentmotor (4), einem kontinuierlichen Motor und einem Schrittmotor gebildet wird.

4. Bremskraftregler nach Anspruch 3, dadurch gekennzeichnet, daß die beweglichen Einrichtungen einen Motor aufweisen, dessen Achse einer Ritzel (25) in Eingriff mit einer Zahnstange (24) aufweist, die mit der zweiten Feder (23) verbunden ist.

EP 0 581 630 B1

FIG.1

FIG.2

EP 0 581 630 B1